# EUROPEAN PATENT SPECIFICATION

(11) **EP 0 595 490 B1**
(45) Date of publication and mention of the grant of the patent: **02.01.1997**
(21) Application number: 93307932.9
(22) Date of filing: 06.10.1993
(51) Int. Cl.: F16B 21/16

(54) **Connecting pin**
Verbindungsstift
Goujon de connexion

(30) Priority: 28.10.1992 JP 80722/92
(43) Date of publication of application: 04.05.1994
(73) Proprietor: Ono, Tatsuo, Chiba (JP)
(72) Inventor: Kuramoto, Kikuzo, Narashino, Chiba (JP); Suzuki, Yoshiyuki, Mito, Ibaragi (JP)
(74) Representative: Powell, Timothy John

(56) References cited:
- EP-A- 0 379 282
- EP-A- 0 438 611

## Description

The present invention relates to a connecting pin used in construction and civil engineering works for connecting two tubular posts, two flat boards, and so forth.

Such connecting means for construction and civil engineering works are known in the prior art in which, when two members such as an outer tube and an inner tube of an extensible tubular post or two flat boards are to be locked or connected, aligned holes are formed in the two members as disclosed in for example US Patent No. 4,348,790 (US-A-4 340 790) and Japanese Utility Model Publication No. 49323/1983 (JP-Y-58-49323), and into these holes is inserted a so-called gravity lock pin for the purpose of connecting the two members together.

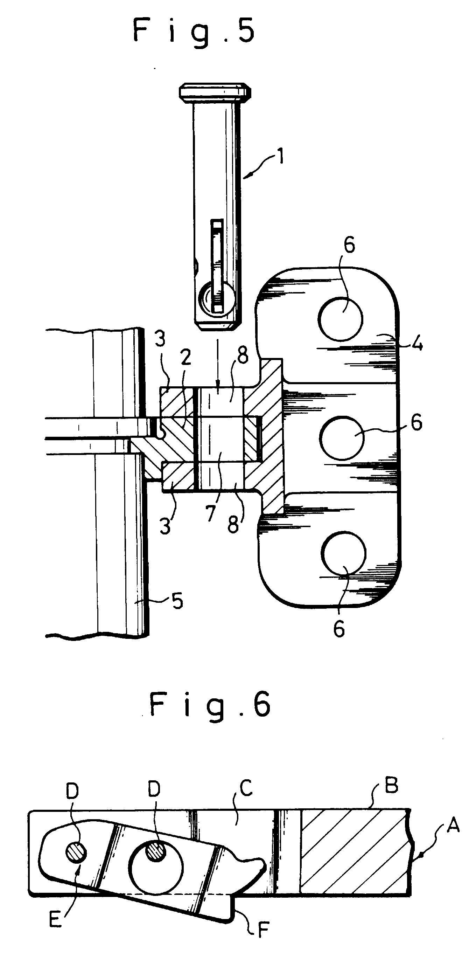

The gravity lock pin A as the connecting means is provided with a slotted forward end C of a round bar-type body B as shown in Figure 6 of the accompanying drawings, and in the slot is rotatably installed a latch E by means of a pivot pin D, so that the pin A may be inserted into aligned holes of two members to be connected, and after insertion, the latch E may rotate out on one side of the shank of the body B, by an amount restricted by cooperation between a further pin D1 and the edge of an aperture E1 in the latch E, to effect locking by a lock portion F of the latch E.

Since the prior art pin A has the slotted forward end C, the forward end portion has a low strength and is subject to cracking or failure.

Furthermore since the latch E rotates out only on one side of the shank part of the body B, the locking force of the pin is weak. Accordingly a small force in a pin withdrawing direction may result in an accidental fall of the pin A in the event that the latch E moves toward the inside of the cut in the forward end C.

Furthermore, in the case of connection between hollow pipes, if this latch E protrudes during insertion, due to its weight, from the shank part of the part B into the pipe (i.e. so that it lies within the pipe), the latch E can become caught by the inner wall of the pipe, with the result that it will become impossible to remove the pin.

According to the invention, there is provided a connecting pin, comprising:
a column-like body with a flange provided integrally on the rear end of the body;
an elongate slot formed through a shank part of the body;
a shaft inserted in the shank part of the body and intersecting the elongate slot;
a latch rotatably supported on the shaft within the slot;
characterised in that:-
the elongate slot is provided intermediate the ends of the body and does not extend fully to the front end of the body;
the latch is supported on the shaft at approximately a mid-position of the latch;
the latch has a plurality of recesses in each of its opposite sides;
two aligned holes are provided in the shank part of the body extending generally parallel to the shaft; and
a respective positioning member is inserted in each of the holes, which positioning members selectively engage in the recesses to retain the latch in a position to which it is rotated on the shaft.

In use of embodiments of a pin according to the invention, after insertion of the body in holes in two members to be connected, the latch may be turned to protrude so as to intersect the body.

At this time, the positioning member may be engaged in one of the slots of the latch to lock the latch, thereby preventing dislocation of the body from the connected members (by means of this latch) and connecting the two members to be connected.

The latch is prevented by the positioning member from protruding out of the long hole when the body is inserted into the hole of the connected members, thus preventing the pin from being caught in the holes of the members to be connected.

Thus, there can be provided a connecting pin having the features that it has great body strength, will not accidentally come off during use for locking purposes and will not foul during insertion and removal.

Preferably the angle of the latch can easily be changed by hand and the position of stowage of the latch can be retained either in a non-latching or in a latching position.

The invention is diagrammatically illustrated by way of example in the accompanying drawings, in which:

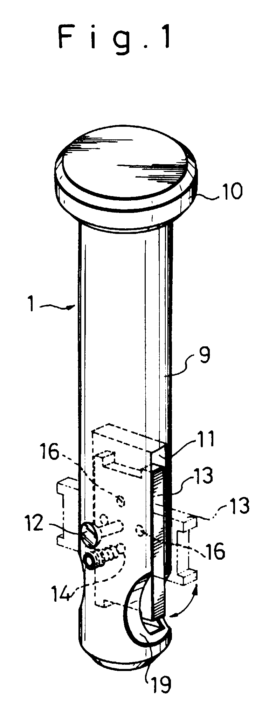

Figure 1 is a perspective view of a connecting pin according to the invention;

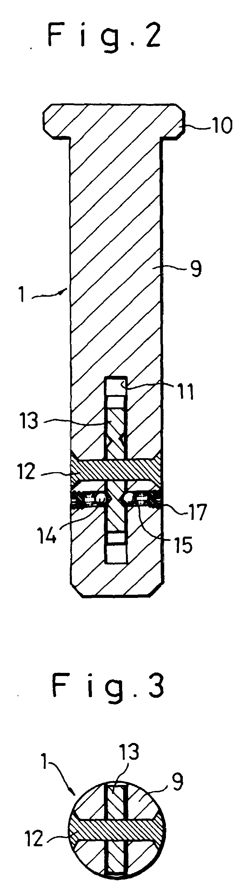

Figure 2 is a longitudinal sectional front view of the connecting pin of Figure 1;
Figure 3 is a transverse sectional view of the connecting pin of Figure 1;
Figure 4 is a longitudinal sectional side view of the connecting pin of Figure 1;
Figure 5 is a front view showing the connecting pin of Figure 1 in a position ready for mounting; and
Figure 6 is a front view, partly longitudinally sectioned, of a prior art connecting pin.

A connecting pin 1 can be used for connecting two members such as two tubular posts or two flat boards.

For example, when, as shown in Figure 5, it is required to secure a multiple-hole flange 2 on the outside periphery of a column 5, a bracket 4 is engaged with this flange 2 by means of holding plates 3, 3, and a horizontal board and a diagonal board may then be connected through holes 6. The connecting pin 1 is inserted into a hole 7 of the flange 2 and into holes 8, 8 of the holding plates 3, 3.

The connecting pin 1 comprises a bar having a round section or a square column-like body 9, a flange 10 provided integrally on the rear end of the body 9, an elongate slot 11 extending vertically through the shank part on the forward end of the body 9, a flat plate-type latch 13 rotatably mounted within the slot 11 by means of a shaft 12, balls 14, 14 captive in the shank part of the body 9, springs 15, 15 for urging the balls 14, 14 towards the latch 13, and slots or recesses 16, 16 in the outside surface of the latch 14 which selectively engage with the balls 14, 14.

The balls 14 and the springs 15 constitute positioning members. Alternative positioning members may be e.g. rubber or other elastic members.

The shaft 12 is inserted at right angles to the plane of the latch 13, and passes through at the centre of the latch 13. The ends of the latch 13 are, selectively, fully stowed within the elongate slot 11 or protrude at right angles to the body 9 as shown in the dotted lines, depending on the setting of the apparatus.

The pin is inserted into the holes 7 and 8 shown in Figure 5 with the latch 13 stowed within the slot 11 of the body 9, and after insertion, the ends of the latch 13 are caused to protrude outwardly. Furthermore, the latch 13 is held in contact with the outside surface of the holding plate 3 (Figure 5) to keep the part in position. In this case, the latch 13, being stowed within the body, will not foul on the inner wall of the holes 7 and 8 during insertion of the connecting pin into the holes.

There are formed in the shank part of the body 9 two holes 17, 17 extending parallel to the shaft 12. In these holes 17, 17 are inserted the balls 14, 14, the springs 15, 15 and the plugs 18, 18. The springs 15, 15 constantly press the balls 14, 14 toward the opposite side surfaces of the latch 13.

In the opposite side surfaces of the lock piece 14 are formed a plurality of recesses or slots 16, 16 for locking the latch 13, for example at four places. The balls 14, 14 respectively enter a pair of the recesses or slots 16, 16 on opposite sides of the latch 13 by moving in a horizontal direction to lock the latch 13 for example when the latch 13 protrudes at a right angle from the connecting pin.

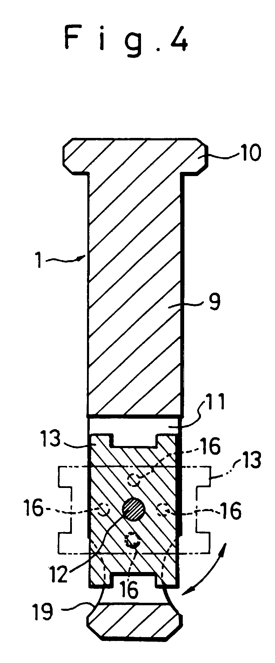

On withdrawal of the latch 13 into the elongate slot 11, the balls 14, 14 respectively engage in the other pair of recesses or slots 16, 16 with the latch 13 lying in a vertical direction as indicated by full lines in Figure 4.

Near the forward end of the body 9 is formed a recess 19 having a hemispherical shape and connecting with the elongate slot 11. The latch 13 can easily be pushed to protrude out of the elongate slot 11 by a finger inserted into the recess 19. In the embodiment shown, there are in fact two recesses 19 formed on opposite sides of the connecting pin 1.

The connecting pin 1 can have the following advantages.
1) The pin body, being a column-like body having no cut in the forward end, has a high strength as to prevent cracking and breakage.
2) The latch is supported at its mid-point by a shaft, and an elongate slot is formed through the body; therefore it is possible to cause both ends of the latch to protrude from the elongate slot, intersecting the body at right angles. Both ends of the latch, therefore, can be held in contact with the outside surface of the connected members at the time of locking, thus ensuring reliable locking of the pin in position.
3) The latch is positioned by a positioning member and prevented from loitering. Since the latch can be stopped precisely in a locking position, the connecting pin is locked with higher reliability. Furthermore the latch can be stowed within the elongate slot; and the latch, properly positioned by the positioning member during stowage, can be smoothly moved in and out without fouling or being caught by the inner wall of the hole when inserted into, or pulled out of, the holes of the connected members.
4) Since a hemispherical recess or its functional equivalent is provided contiguously with the elongate slot, the latch can easily be moved in and out during changing of its angle, by means of finger pressure.

## Claims

1. A connecting pin, comprising:
a column-like body (9) with a flange (10) provided integrally on the rear end of the body (9);
an elongate slot (11) formed through a shank part of the body (9);
a shaft (12) inserted in the shank part of the body (9) and intersecting the elongate slot (11);
a latch (13) rotatably supported on the shaft (12) within the slot (11);
characterised in that:-
the elongate slot (11) is provided intermediate the ends of the body (9) and does not extend fully to the front end of the body (9);
the latch (13) is supported on the shaft (12) at approximately a mid-position of the latch (13);
the latch (13) has a plurality of recesses (16,16) in each of its opposite sides;
two aligned holes (17,17) are provided in the shank part of the body (9) extending generally parallel to the shaft (12); and
a respective positioning member (14,14) is inserted in each of the holes, which positioning members selectively engage in the recesses (16,16) to retain the latch (13) in a position to which it is rotated on the shaft (12).

2. A connecting pin according to claim 1, wherein a generally hemispherical recess (19) is formed connecting with the elongate slot (11) in the shank part of the body (9).

3. A connecting pin according to claim 1 or claim 2, wherein each positioning member (14,14) comprises an engaging member, e.g. a ball and a spring (15,15) which urges the engager member (14,14) towards the latch (13).

4. A connecting pin according to any preceding claim, wherein there are provided in the latch (13) two of the recesses (16,16) permitting securing of the latch (13) in a generally horizontal orientation and another two recesses (16,16) permitting securing of the latch (13) in a generally vertical orientation.

## Patentansprüche

1. Verbindungsstift mit
einem säulenartigen Körper (9) mit einem Flansch (10), der einstückig an dem Hinterende des Körpers (9) vorgesehen ist,
einem länglichen Schlitz (11), der durch ein Schaftteil des Körpers (9) hindurch ausgebildet ist,
einem Stiel (12), der in den Schaftteil des Körpers (9) eingesetzt ist und den länglichen Schlitz (11) schneidet,
einem drehbar auf dem Stiel (12) in dem Schlitz (11) gelagerten Riegel (13),
**dadurch gekennzeichnet,** daß
der längliche Schlitz (11) zwischen den Enden des Körpers (9) vorgesehen ist und sich nicht vollständig bis zum Vorderende des Körpers (9) erstreckt,
der Riegel (13) auf dem Stiel (12) etwa in einer Mittelposition des Riegels (13) gelagert ist,
der Riegel (13) mehrere Vertiefungen (16, 16) in jeder seiner gegenüberliegenden Seiten hat,
zwei ausgerichtete Löcher (17, 17) in dem Schaftteil des Körpers (9) vorgesehen sind und sich allgemein parallel zu dem Stiel (12) erstrecken und
jeweils ein Positionierteil (14, 14) in jedes der Löcher eingesetzt ist, wobei diese Positionierteile selektiv in die Vertiefungen (16, 16) eingreifen, um den Riegel (13) in einer Position zu halten, in welche er auf dem Stiel (12) gedreht wird.

2. Verbindungsstift nach Anspruch 1, bei dem eine allgemein halbkugelförmige Vertiefung (19) ausgebildet ist, die mit dem länglichen Schlitz (11) in dem Schaftteil des Körpers (9) verbunden ist.

3. Verbindungsstift nach Anspruch 1 oder Anspruch 2, bei dem jedes Positionierteil (14, 14) ein Eingriffteil, z. B. eine Kugel und eine Feder (15, 15) umfaßt, welches das Positionierteil (14, 14) zu dem Riegel (13) preßt.

4. Verbindungsstift nach einem der vorausgehenden Ansprüche, bei dem in dem Riegel (13) zwei der Vertiefungen (16) so vorgesehen sind, daß sie eine Befestigung des Riegels (13) in einer allgemein horizontalen Ausrichtung erlaubt, und weitere zwei Vertiefungen (16, 16) vorgesehen sind, die eine Befestigung des Riegels (13) in einer allgemein vertikalen Ausrichtung erlauben.

## Revendications

1. Goujon de connexion, comprenant :
un corps en colonne (9) avec un rebord (10) formé en partie intégrante sur l'extrémité arrière du corps (9);
une fente allongée (11) formée dans une partie tige du corps (9);
un arbre (12) inséré dans la partie tige du corps (9) et coupant la fente allongée (11);
un cliquet (13) supporté à rotation sur l'arbre (12) au sein de la fente (11);
caractérisé en ce que :
la fente allongée (11) est située entre les extrémités du corps (9) et ne s'étend pas complètement jusqu'à l'extrémité avant du corps (9);
le cliquet (13) est supporté sur l'arbre (12) sensiblement en une position centrale du cliquet (13);
le cliquet (13) comporte une pluralité d'évidements (16, 16) dans chacune de ses faces opposées;
deux orifices alignés (17, 17) sont formés dans la partie tige du corps (9) s'étendant généralement parallèlement à l'arbre (12); et
un organe de positionnement respectif (14, 14) est inséré dans chacun des orifices, lesquels organes de positionnement s'engagent sélectivement dans les évidements (16, 16) pour retenir le cliquet (13) dans une position jusqu'à laquelle il est entraîné à rotation sur l'arbre (12).

2. Goujon de connexion selon la revendication 1, dans lequel un évidement (19) généralement hémisphérique est formé en connexion avec la fente allongée (11) dans la partie tige du corps (9).

3. Goujon de connexion selon la revendication 1 ou 2, dans lequel chaque organe de positionnement (14, 14) comprend un organe d'engagement, par exemple une bille, et un ressort (15, 15) qui sollicite l'organe d'engagement (14, 14) vers le cliquet (13).

4. Goujon de connexion selon l'une quelconque des revendications précédentes, dans lequel sont prévus dans le cliquet (13) deux des évidements (16, 16) permettant de fixer le cliquet (13) dans une orientation généralement horizontale et deux dits autres évidements (16, 16) permettant de fixer le cliquet (13) dans une orientation généralement verticale.
